# FASCICULE DE BREVET EUROPEEN

(11) **EP 0 449 736 B1**
(45) Date de publication et mention de la délivrance du brevet: **10.08.1994**
(21) Numéro de dépôt: 91400841.2
(22) Date de dépôt: 28.03.1991
(51) Int. Cl.: G21C 11/08, F27D 1/00

(54) **Bouclier thermique**
Wärmeschutzschild
Thermal buckler

(30) Priorité: 30.03.1990 FR 9004108
(43) Date de publication de la demande: 02.10.1991
(73) Titulaire: COMMISSARIAT A L'ENERGIE ATOMIQUE, 75015 Paris (FR)
(72) Inventeur: Lipa, Manfred, F-13770 Venelles (FR); Deck, Claude, F-13100 Aix en Provence (FR); Deschamps, Pierre, F-13100 Aix en Provence (FR)
(74) Mandataire: Signore, Robert

(56) Documents cités:
- GB-A- 2 040 415
- US-A- 1 574 946
- US-A- 3 023 545
- US-A- 3 979 866

## Description

### DOMAINE DE L'INVENTION

Le domaine de l'invention est la protection des structures contre des flux thermiques continus très élevés, d'environ 100 W/cm². Ce type de protection est utilisé en particulier dans les réacteurs à fusion et dans les fours à très haute température.

### ART ANTERIEUR

Plusieurs types de bouclier thermique ont déjà été mis au point et utilisent des tuiles comme éléments de protection.
- Un premier type de boucliers thermiques utilise des tuiles rondes qui, compte tenu de leur forme circulaire, ont pour principal inconvénient de ne pas recouvrir totalement la paroi à protéger.
- Un deuxième type de bouclier thermique utilise des tuiles dont les moyens de fixation de la paroi à protéger sur la structure porteuse aboutissent sur la surface externe de la tuile et sont ainsi exposés au flux thermique.
- Un troisième type de bouclier thermique utilise des tuiles ayant chacune un pied fixe en forme de crochet dont la mise en place nécessite un mouvement de translation de ladite tuile, ce qui complique le montage et entraîne un contact irrégulier donc un mauvais transfert thermique entre la tuile et son support.

Le but de l'invention est de proposer un bouclier thermique ne présentant pas les inconvénients des différents types de boucliers thermiques évoqués ci-dessus.

### RESUME DE L'INVENTION

A cet effet, l'invention concerne un bouclier thermique tel que selon le US-A- 3979866 constitué principalement par :
- une structure support, en un matériau bon conducteur de la chaleur, refroidie par une circulation interne d'un fluide de réfrigération ;
- des tuiles de protection de forme parallélépipédique, en un matériau résistant à des températures élevées ;
- une couche de conformation serrée entre chaque tuile et la structure support par l'intermédiaire de moyens élastiques de fixation.

Ce bouclier thermique se caractérise en ce que les moyens élastiques de fixation comprennent pour chaque tuile :
- un tirant fixé par une première extrémité dans la face arrière de la tuile ;
- un ressort à lame fixé en son centre perpendiculairement à la deuxième extrémité du tirant ;
- un bras mobile de serrage coulissant autour du tirant, entre le ressort et la tuile, et ayant à chaque extrémité une surface d'appui sur laquelle s'arc-boutent respectivement chacune des extrémités du ressort à lames, mis en tension par des moyens de serrage.

Ces moyens de serrage sont constitués de préférence par deux vis de serrage, vissées dans la structure support et dont les deux têtes prennent appui respectivement sur les deux extrémités du bras de serrage en regard de la face arrière de la tuile, chaque tête étant accessible par la face avant de la tuile par un orifice de serrage de faible diamètre.

Pour permettre l'encastrement des moyens élastiques de fixation dans la structure support, on prévoit sur la surface de contact de la structure support une rainure longitudinale dans laquelle débouchent les trous de fixation, pour recevoir le bras de serrage et à l'intérieur de laquelle ce bras de serrage peut s'enfoncer sous l'action des vis de serrage pour solliciter le ressort à lames, après que la face arrière de la tuile ait été mise en contact avec la couche de conformation déposée sur la structure support.

Une condition de fonctionnement des moyens élastiques de fixation du bouclier thermique selon l'invention est que la distance, au repos, séparant la face arrière de la tuile de la face sous-jacente de chaque extrémité du bras de serrage doit être inférieure à la profondeur de la rainure longitudinale pour permettre la compression du ressort nécessaire au serrage de la couche de conformation entre la tuile et la structure support.

Dans le cas où la structure support comporte des canalisations de réfrigération parallèles entre elles, la rainure longitudinale de la structure support est parallèle à ces canalisations de réfrigération.

### LISTE DES FIGURES

L'invention et ses différentes caractéristiques seront mieux comprises à la lecture de la description qui va suivre, donnée à titre illustratif et non limitatif. Elle est annexée de figures représentant respectivement :
- figure 1, une tuile et ses moyens de fixation dans la structure support selon l'invention ;
- figures 2A, 2B, deux coupes montrant l'installation de la tuile de la figure 1 sur la structure support ;
- figures 3A, 3B, des vues de côté, avec coupes, des figures 2A et 2B ; et
- figure 4, une vue en perspective de dessus de la structure porteuse utilisée dans l'invention et destinée à recevoir plusieurs tuiles.

### DESCRIPTION DETAILLEE D'UNE REALISATION DE L'INVENTION

Les tuiles du bouclier thermique selon l'invention sont exposées par leur face avant au flux thermique contre lequel il faut protéger certains éléments d'une installation. Ainsi, un tel bouclier permet de protéger certains composants d'un réacteur à fusion contre le rayonnement thermique du plasma.

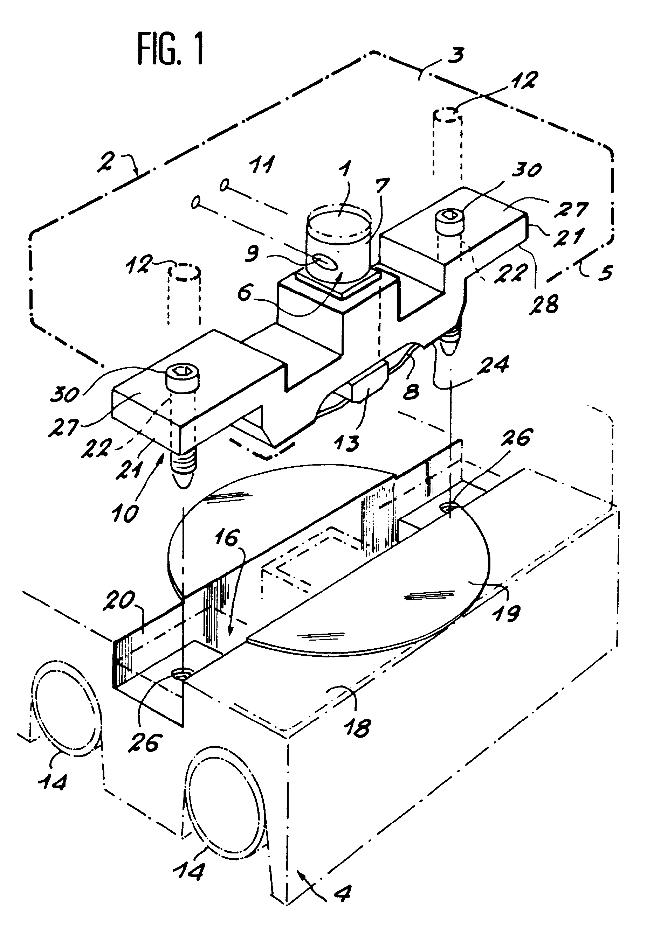

Le bouclier comprend principalement des tuiles fixées sur une structure support, la figure 1 représentant une de ces tuiles avec ses moyens de fixation sur la structure support.

La tuile protectrice 2, directement exposée au flux thermique, est en un matériau résistant à des températures élevées, tel que le graphite, les matériaux réfractaires ou composites. Elle a une forme parallélépipédique permettant le recouvrement complet d'un support. De préférence, cette forme est rectangulaire. Au moins deux orifices de serrage 12 de faible diamètre sont effectués à travers la tuile 2 pour permettre le passage ultérieur d'outillages destinés au blocage de la tuile sur la structure support par l'intermédiaire de moyens de fixation. Un alésage 1 est prévu sur la face arrière 5, c'est-à-dire la face qui n'est pas exposée au flux thermique, perpendiculairement à la tuile 2, pour recevoir un tirant 6 de fixation de la tuile 2. Une façon de bloquer en translation ce tirant 6 dans l'alésage 1 consiste à pratiquer au moins un trou dans la tuile 2, perpendiculaire et tangent à l'alésage 1, de manière à pouvoir y introduire une goupille de blocage 11. Dans ce cas, le tirant 6 possède une rainure correspondant à la goupille 11.

La structure support 4 sur laquelle est fixée la tuile 2 est représentée en bas de la figure 1 par l'un de ces éléments. Cette structure support est composée de blocs longitudinaux, parcourus par des canalisations 14 dans lesquelles circule un fluide de réfrigération. Ces canalisations sont de préférence parallèles entre elles et ont une surface externe de contact importante avec la structure support 4, dans le but d'assurer une bonne évacuation des calories transférées par la tuile 2 à la structure support 4 par l'intermédiaire de la couche de conformation 19. Une rainure longitudinale 20 est prévue sur une surface de contact 18 de la structure support 4 pour constituer un logement aux moyens élastiques de fixation de la tuile 2. Cette rainure longitudinale 20 est de préférence positionnée entre deux canalisations de réfrigération 14.

Cette structure support 4 est en un matériau de bonne conduction thermique, tel que le cuivre, l'aluminium. Le fluide de réfrigération circulant dans les canalisations 14 peut être de l'eau, de l'air, ... Cette canalisation 14 peut être constituée par des tubes, de section circulaire ou quelconque, mais toujours en un matériau de bonne conduction thermique.

Comme le montre la figure 1, les moyens élastiques de fixation sont constitués du tirant 6 fixé par une première extrémité 7 dans l'alésage 1 de la tuile 2, du côté de la face arrière 5 de cette dernière. Les moyens élastiques de fixation se complètent d'un ressort 8 à lames fixé à la deuxième extrémité 13 du tirant 6. Ce ressort 8 s'étend perpendiculairement de chaque côté du tirant 6 par deux bras de même longueur. Il est généralement multilame et est construit en un matériau résistant thermiquement, tel que INCONEL, NIMONIC.

Autour du tirant 6, est monté coulissant un bras mobile de serrage 10. Ce bras se termine par deux extrémités 21 comportant chacune un trou lisse 22. L'entraxe de ces deux trous lisses 22 correspond à l'entraxe des deux orifices de serrage 12 de la tuile 2. Ce bras de serrage 10 possède deux premières surfaces d'appui 24 sur lesquelles s'arc-boutent les deux extrémités du ressort à lames 8. L'épaisseur des extrémités 21 du bras de serrage 10 est très inférieure à la profondeur de la rainure longitudinale 20 de la structure support 4 dans laquelle le bras de serrage vient se loger, lors du montage de la tuile 2 et de ses moyens de fixation.

Les moyens élastiques de fixation comprennent des moyens de mise en tension du ressort 8. Ceux-ci sont constitués de préférence par des vis de serrage 30 placées dans les trous lisses 22 du bras de serrage 10 et dont le filetage correspond au taraudage des trous de fixation 26 pratiqués dans la structure support 4. Des trous taraudés 26 sont pratiqués dans la structure support 4, au fond de la rainure longitudinale 20. Leur entraxe correspond à l'entraxe des orifices de serrage 12 de la tuile 2. Les vis de serrage 30 agissent par leurs têtes sur la surface d'appui 27, opposée à la surface d'appui 28 des bras de serrage 10.

La surface de contact 18 de la structure support est complétée d'une couche de conformation 19 pour optimiser le transfert thermique par conduction entre la tuile 2 et la structure support 4. Cette couche de conformation 19 peut être constituée d'un matériau de type PAPYEX, de tissage métallique ou équivalent.

Cette description des moyens élastiques de fixation est un exemple de réalisation.

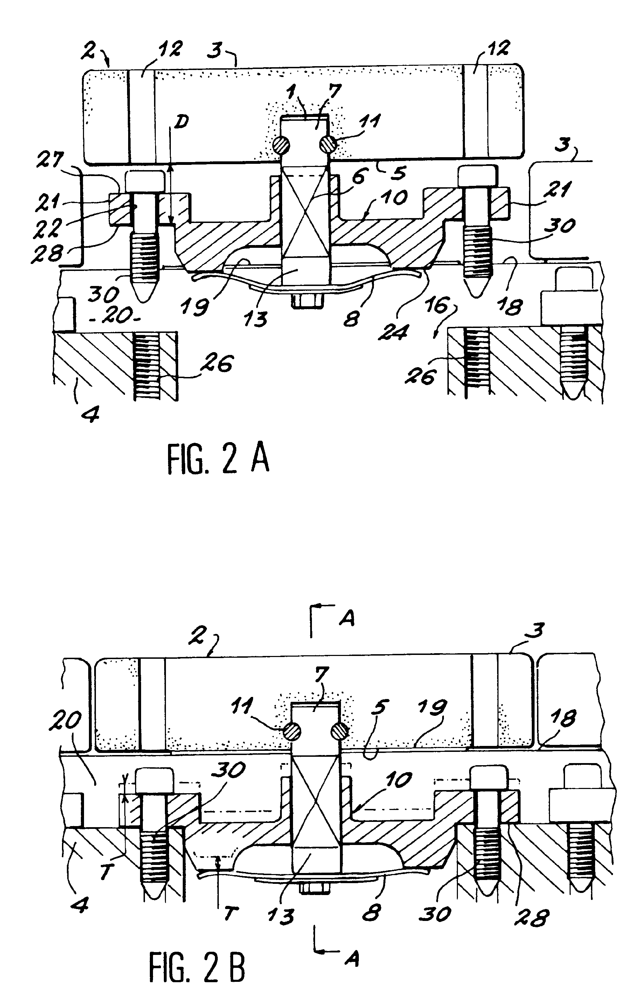

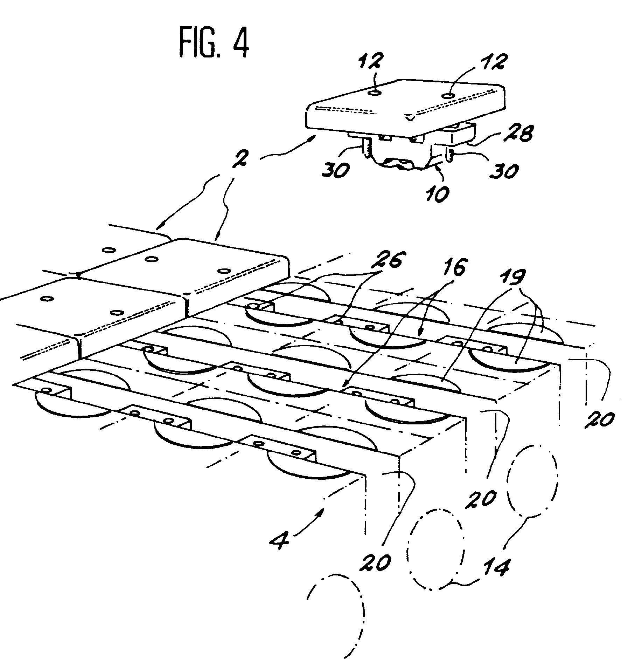

En effet, le concept de fixation de la tuile 2 sur la structure support 4 est le suivant. Les moyens élastiques de fixation sont fixés dans la tuile 2 par la face arrière 5 de cette dernière, la déformation de serrage se faisant perpendiculairement à la tuile 2. Les orifices de serrage 12 permettent d'accéder aux têtes des vis de serrage 30 et de commander à l'aide d'une clef appropriée le rapprochement du bras de serrage 10 par rapport à la structure support 4. De ce fait, le ressort 8 se trouve tendu et applique la tuile 2 contre la structure support 4. Cette mise en place est mieux expliquée dans les paragraphes suivants, en correspondance avec les figures 2A et 2B.

Sur la figure 2A, une tuile 2 est placée en regard de l'endroit où elle doit être fixée sur la structure support 4, en l'occurrence entre quatre autres tuiles. Les moyens élastiques de fixation constitués du tirant 6, du ressort 8 et du bras de serrage 10 sont déjà en place sur la face arrière de la tuile, les têtes des vis de fixation 30 étant placées en regard des orifices de serrage 12 de la tuile 2 et la partie filetée de ces vis 30 étant placée dans l'axe des trous taraudés 26 de la structure support 4. Le ressort 8 est détendu. Ses deux extrémités supportent le bras de serrage 10.

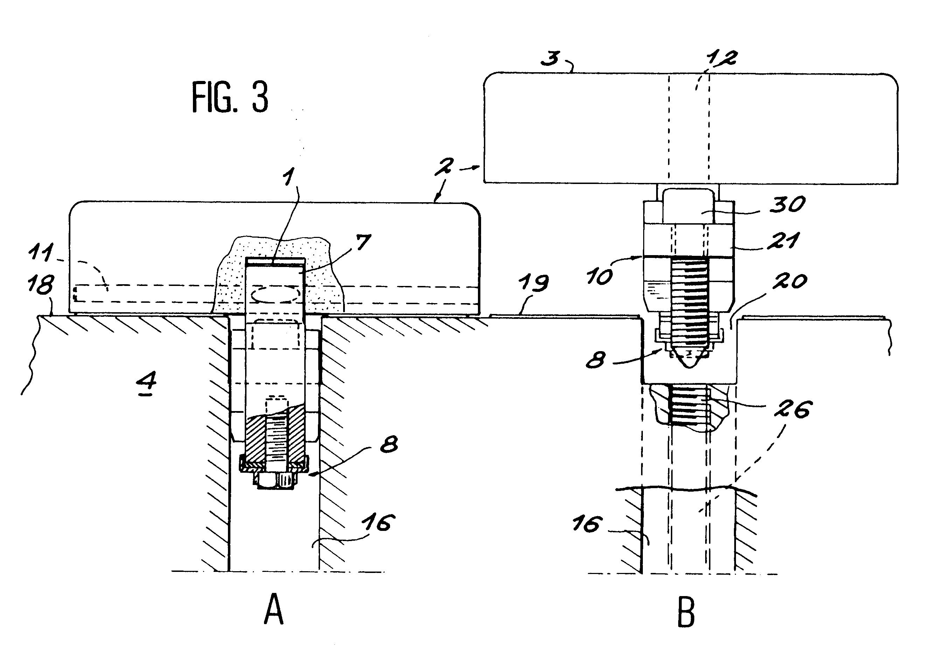

Les têtes des vis de serrage 30 sont des vis à six pans creux, ce qui permet de les visser, au travers des orifices de serrage 12, au moyen de clefs appropriées. Lors de leur vissage dans les trous taraudés 26, les vis de serrage 30 entraînent l'ensemble constitué de la tuile 2 et de ses moyens élastiques de fixation. Durant le serrage, la tuile 2 vient en contact, par sa face arrière 5 contre la couche de conformation déposée sur la structure support 4. Si le serrage continue, la tuile 2 et le tirant 6 restent immobiles, mais le bras de serrage 10 est entraîné plus profondément dans la rainure 20 par les vis de serrage 30 en coulissant autour du tirant 6, ce qui a pour conséquence de mettre en tension le ressort 8 de la manière représentée sur la figure 3B. Le fléchissement subi par les extrémités du ressort à lames 8 correspond à la translation T des extrémités 21 du bras de serrage 10 vers la structure support 4, une fois que la tuile 2 est en contact avec cette dernière. Ceci revient à dire que la distance D au repos, séparant les surfaces d'appui 28 des extrémités 21 du bras de serrage 10 placées en regard de la couche de conformation 19 déposée sur la structure support 4 à la face arrière 5 de la tuile 2, doit être inférieure à la profondeur de la rainure longitudinale 20.

Le montage d'une telle tuile 2 peut donc être effectué en positionnant le bras de serrage 10 dans la rainure 20, puis en vissant les vis de serrage 30 au moyen d'une clef coudée pour vis à six pans creux, introduite dans les orifices de serrage 12 de la tuile 2. Ce serrage doit être effectué jusqu'à ce que la flexion du ressort à lames 8 soit telle qu'elle applique une force de serrage suffisante de la tuile 2 contre la couche de conformation de la structure support 4, permettant ainsi d'obtenir un très bon transfert thermique par conduction de la tuile 2 vers la structure support 4.

Le montage d'une tuile 2 est également représenté à l'aide des figures 3A et 3B, qui sont à considérer en correspondance respectivement avec les figures 2A et 2B.

Sur la figure 3A, qui est une vue de côté, la rainure 20 a le profil correspondant aux extrémités du bras de serrage 10, c'est-à-dire que la largeur de cette rainure longidutinale 20 est légèrement supérieure à la largeur du bras de serrage 10.

La figure 3B est une coupe selon la ligne A-A de la figure 2B, l'ensemble de la tuile 2 et de ses moyens élastiques de fixation étant fixé sur la structure support 4. On constate que la rainure longitudinale 20 a une profondeur plus importante au centre des moyens de fixation qu'au niveau des trous de fixation 26. On peut même envisager que la structure support 4 soit complètement traversée dans la partie centrale 16 de la rainure 20 entre les trous de fixation 26.

La figure 4 montre une structure support 4 recouvrant une surface à protéger. Elle possède plusieurs rainures longitudinales 20, parallèles entre elles et comportant plusieurs séries de trous de fixation 26, dans le but de recevoir chacune une série de tuiles de protection 2 alignées les unes par rapport aux autres. Ainsi, une grande surface à protéger peut être recouverte d'un bouclier thermique, tel qu'il vient d'être décrit.

### AVANTAGES DE L'INVENTION

Les moyens élastiques de fixation selon l'invention permettent d'assurer, par l'intermédiaire d'une couche de conformation, un très bon transfert thermique par conduction entre la tuile soumise à un flux thermique intense et la structure support réfrigérée. Ceci permet de limiter la température en surface des tuiles de protection et d'augmenter la durée de vie du bouclier, car l'érosion par évaporation dépend directement de la température et du flux thermique incident.

A titre indicatif, on peut signaler que le bouclier thermique décrit ci-dessus est dimensionné pour protéger une structure d'un flux thermique incident et continu pouvant atteindre 100 W/cm² sur une tuile de graphite ayant la forme d'un parallélogramme de 12 x 12 x 2 cm³. L'épaisseur de la couche de conformation, repérée 19 sur les figures, est fonction de sa rigidité et de sa conduction thermique. Dans l'exemple mentionné ci-dessus, elle a une épaisseur d'environ un millimètre. Le transfert thermique est suffisant entre chaque tuile et la structure support refroidie pour limiter la température de surface de la tuile a une température inférieure à 1 000°C.

Un avantage important du bouclier thermique selon l'invention est que chaque tuile a une liaison mécanique indépendante avec la structure support. Ce concept permet un remplacement facile, rapide et au besoin automatisé, de chaque tuile indépendamment des tuiles voisines. En effet, la mise en place et le blocage de chaque tuile, qui s'effectue par la face avant du bouclier, nécessite ni mouvement de rotation ou translation de la pièce, ni une accessibilité par l'arrière de la structure support.

La couche de conformation disposée entre chaque tuile et la structure support n'est pas soumise à des contraintes de glissement ou de cisaillement pendant le montage, seules restent exercées des contraintes de compression.

Le mécanisme de fixation de chaque tuile est situé à l'abri du flux thermique et de l'érosion auxquels est soumise chaque tuile.

Le bouclier thermique selon l'invention peut s'appliquer à la protection de certains composants installés dans un réacteur à fusion thermonucléaire où le plasma créé dans le coeur émet un rayonnement thermique très intense.

Des équipements industriels, tels que des fours, dans lesquels la température des composants en matière réfractaire doit être limitée, peuvent également être équipés du bouclier thermique selon l'invention. Elle permet un remplacement fréquent et rapide de chaque élément du bouclier.

Le bouclier thermique selon l'invention peut également être installé sur un véhicule spatial, devant effectuer une rentrée dans l'atmosphère terrestre.

## Revendications

1. Bouclier thermique constitué principalement par :
- une structure support (4), en un matériau bon conducteur de la chaleur, refroidie par une circulation interne d'un fluide de réfrigération ;
- des tuiles de protection (2) de forme parallélépipédique, en un matériau résistant à des températures élevées ;
- une couche de conformation (19) serrée entre chaque tuile (2) et la structure support (4) par l'intermédiaire de moyens élastiques de fixation,
caractérisé en ce que les moyens élastiques de fixation comprennent pour chaque tuile (2) :
- un tirant (6) fixé par une première extrémité (7) dans la face arrière (5) de la tuile (2) ;
- un ressort à lames (8) fixé en son centre perpendiculairement à la deuxième extrémité (13) du tirant (6) ;
- un bras mobile de serrage (10) coulissant autour du tirant (6), entre le ressort (8) et la tuile (2) et ayant à chaque extrémité une surface d'appui (28) sur laquelle s'arc-boutent respectivement chacune des extrémités du ressort à lames (8), mis en tension par des moyens de serrage.

2. Bouclier selon la revendication 1 ou 2, caractérisé en ce que les moyens de serrage sont composés d'au moins deux vis de serrage (30) vissées dans des trous de fixation (26) de la structure support (4) et dont les deux têtes prennent appui respectivement sur deux extrémités (21) du bras de serrage (10) en regard de la face arrière (5) de la tuile (2), chaque tête étant accessible par la face avant (3) de la tuile (2) par un orifice de serrage (12) de faible diamètre.

3. Bouclier selon la revendication 2, caractérisé en ce que la surface de contact (18) de la structure support (4) sur laquelle débouchent les trous de fixation (26) a une rainure longitudinale (20) pour recevoir le bras de serrage (10) et à l'intérieur de laquelle ce bras de serrage (10) peut s'enfoncer sous l'action des vis de serrage (30) pour solliciter le ressort (8), après que la face arrière (5) de la tuile (2) ait été mise en contact avec la couche de conformation (19) déposée sur la structure support (4), la distance au repos séparant la face arrière (5) de la tuile (2) de la face sous-jacente de chaque extrémité (21) du bras de serrage (10) étant inférieure à la profondeur de la rainure longitudinale (20) pour permettre la compression du ressort (8) nécessaire au serrage de la couche de conformation (19) entre la tuile (2) et la structure support (4).

4. Bouclier selon l'une quelconque des revendications, dans lequel la structure support (4) comporte des canalisations de réfrigérant (14) parallèles entre elles, caractérisé en ce que la rainure longitudinale (20) est parallèle aux canalisations (14).

## Patentansprüche

1. Wärmeschutzschild, hauptsächlich bestehend aus:
- einer Trägerstruktur (4) aus einem Material mit guten Wärmeleiteigenschaften, gekühlt durch eine Innenzirkulation eines Kühlfluids;
- Schutzkacheln (2) von parallelflacher Form aus einem Material, das hohen Temperaturen widersteht;
- einer Formschicht (19), eingeklemmt zwischen jeder Kachel (2) und der Trägerstruktur (4) mittels elastischen Befestigungseinrichtungen,
**dadurch gekennzeichnet,** daß die elastischen Befestigungseinrichtungen für jede Kachel (2) umfassen:
- eine Zugstange (6), mit einem ersten Ende (7) befestigt an der Rückseite der Kachel (2);
- eine Blattfeder (8), in ihrer Mitte senkrecht an dem zweiten Ende (13) der Zugstange (6) befestigt;
- einen beweglichen Spannarm (10), um die Zugstange (6) gleitend, zwischen der Feder (8) und der Kachel (2), dabei an jedem Ende eine Auflagefläche (28) aufweisend, auf der sich jeweils jedes der Enden der durch Spanneinrichtungen gespannten Blattfeder (8) abstützt.

2. Wärmeschutzschild nach Anspruch 1 oder 2, dadurch gekennzeichnet, daß die Spanneinrichtungen gebildet werden durch wenigstens zwei Spannschrauben (30), die in Befestigungslöcher (26) der Trägerstruktur (4) geschraubt sind und deren beiden Köpfe sich jeweils abstützen auf zwei Enden (21) des Spannarms (10), gegenüber der Rückseite (5) der Kachel (2), wobei jeder Kopf von der Vorderseite (3) der Kachel (2) aus zugänglich ist durch ein Spannloch (12) mit kleinem Durchmesser.

3. Wärmeschutzschild nach Anspruch 2, dadurch gekennzeichnet, daß die Kontaktoberfläche (18) der Trägerstruktur (4), an der die Befestigungslöcher (26) münden, eine Längsnut (20) aufweisen, um den Spannarm (10) aufzunehmen, und in deren Inneres dieser Spannarm (10) unter der Wirkung der Spannschrauben (30) eindringen kann um die Feder (8) zu spannen, nachdem die Rückseite (5) der Kachel (2) in Kontakt gebracht wurde mit der Formschicht (19), aufgebracht auf der Trägerstruktur (4), wobei der Abstand bei Ruhestellung, der die Rückseite (5) der Kachel (2) von der darunterliegenden Fläche jedes Endes (21) des Spannarms (10) trennt, kleiner ist als die Tiefe der Längsnut (20), um die Kompression der Feder (8) zu ermöglichen, die erforderlich ist für das Klemmen der Formschicht (19) zwischen der Kachel (2) und der Trägerstruktur (4).

4. Wärmeschutzschild nach einem beliebigen der Ansprüche, bei dem die Trägerstruktur (4) parallel zueinander verlaufende Kühlleitungen (14) aufweist, dadurch gekennzeichnet, daß die Längsnut (20) parallel ist zu den Kühlleitungen (14).

## Claims

1. Heat shield mainly constituted by a support structure (4) made from a good heat conducting material and cooled by an internal cooling fluid flow, parallelepipedic protective tiles (2) made from a material resistant to high temperatures and a shaping layer (19) locked between each tile (2) and the support structure (4) via elastic fixing means, characterized in that the elastic fixing means comprise for each tile (2) a tie rod (6) fixed by a first end (7) in the rear face (5) of the tile (2), a plate spring (8) fixed in its centre perpendicular to the second end (13) of the tie rod (6) and a mobile locking arm (10) sliding around the tie rod (6) between the spring (8) and the tile (2) and having at each end a bearing surface (28) against which respectively abut each of the ends of the plate spring (8) tensioned by the locking means.

2. Shield according to claim 1 or 2, characterized in that the locking means are constituted by at least two locking screws (30) screwed into the fixing holes (26) of the support structure (4) and whereof the two heads respectively bear on the two ends (21) of the locking arm (10) facing the rear face (5) of the tile (2), each head being accessible by the front face (3) of the tile (2) by a small diameter locking orifice (12).

3. Shield according to claim 2, characterized in that the contact surface (18) of the support structure (4) onto which issue the fixing holes (26) has a longitudinal channel (20) for receiving the locking arm (10) and within which the locking arm (10) can be engaged under the action of locking screws (30) in order to act on the spring (8), after the rear face (5) of the tile (2) has been contacted with the shaping layer (19) deposited on the support structure (4), the distance in the inoperative state separating the rear face (5) of the tile (2) from the underlying face of each end (21) of the locking arm (10) being less than the depth of the longitudinal channel (20) so as to permit the compression of the spring (8) necessary for the locking of the shaping layer (19) between the tile (2) and the support structure (4).

4. Shield according to any one of the preceding claims, in which the support structure (4) has parallel cooling medium ducts (14), characterized in that the longitudinal channel (20) is parallel to the ducts (14).
